# FASCICULE DE BREVET EUROPEEN

(11) **EP 1 466 442 B1**
(45) Date de publication et mention de la délivrance du brevet: **09.05.2007**
(21) Numéro de dépôt: 03709857.1
(22) Date de dépôt: 07.01.2003
(51) Int. Cl.: H04L 12/26

(54) **PROCEDE ET SYSTEME D'OBSERVATION D'UN RESEAU DE COMMUNICATION**
VERFAHREN UND SYSTEM ZUR STATUSÜBERWACHUNG EINES KOMMUNIKATIONSNETZWERKS
METHOD FOR MONITORING A COMMUNICATION NETWORK AND SYSTEM THEREFOR

(30) Priorité: 15.01.2002 FR 0200426
(43) Date de publication de la demande: 13.10.2004
(73) Titulaire: FRANCE TELECOM, 75015 Paris (FR)
(72) Inventeur: DUBOIS, Nicolas, F-78750 Mareil-Marly (FR); FONDEVIOLE, Benoît, F-75016 Paris (FR); DAUVERGNE, Emmanuel, F-75015 Paris (FR)
(74) Mandataire: Loisel, Bertrand
(86) Numéro de dépôt international: PCT/FR2003/000022
(87) Numéro de publication internationale: WO 2003/061201

(56) Documents cités:
- EP-A- 0 841 832
- US-A- 5 610 905

## Description

La présente invention concerne le fonctionnement d'un réseau de communication procédant par transmission de paquets.

Elle concerne plus particulièrement un procédé d'observation du fonctionnement d'un réseau de communication par transmission de paquets.

Un tel réseau de communication comprend des éléments de transfert des paquets, appelés routeurs, reliés entre eux et qui constituent des relais pour le transfert de paquets entre un point de départ et un point d'arrivée de ce réseau. Des paquets sont produits par un élément de transfert du réseau ou par un terminal d'utilisateur relié au réseau à destination d'un autre élément de transfert du réseau ou d'un terminal récepteur. Divers terminaux de communication émetteurs et/ou récepteurs peuvent être connectés à des points de départ ou d'arrivée du réseau. Un autre réseau, par exemple un réseau local («Local Area Network» ou LAN) peut aussi être connecté à ces points par des routeurs appropriés, dits passerelles. En général, les liaisons entre les routeurs forment un maillage de la zone géographique desservie par le réseau de communication. Ainsi, pour le transfert d'un paquet entre un point de départ et un point d'arrivée du réseau, plusieurs chemins sont possibles, correspondant chacun à une succession de routeurs et de liaisons par lesquels sont transférés les paquets de communication.

Diverses méthodes sont utilisées pour observer le fonctionnement de tels réseaux de communication, lors de la mise en oeuvre de ces réseaux, ou bien lors d'opérations de contrôle ou de maintenance de ces réseaux. De telles méthodes sont par exemple basées sur le protocole de gestion de réseau SNMP («Simple Network Management Protocole, voir RFC 1157 publiée en mai 1990 par l'organisation IETF (« Internet Engineering Task Force »)). Elles présentent notamment l'inconvénient de procéder par interrogations des routeurs pour obtenir des éléments de fonctionnement de ces routeurs. Une part de l'activité des routeurs interrogés est alors consacrée à répondre à ces interrogations, ce qui réduit leur disponibilité pour la tache de transfert des paquets, et peut perturber le traitement des paquets. Dans des cas extrêmes, cette interrogation peut même provoquer une congestion du réseau, aboutissant à un arrêt de son fonctionnement, à cause d'une disponibilité résiduelle des routeurs insuffisante pour assurer le transfert des paquets.

Un autre inconvénient de ces méthodes basées sur le protocole SNMP est leur vulnérabilité par rapport à des actions dirigées contre le fonctionnement du réseau ou contre ses utilisateurs. De telles actions sont menées par des individus mal-intentionnés qui peuvent utiliser les mêmes canaux que les interrogations adressées aux routeurs à des fins de contrôle du fonctionnement du réseau.

D'autres méthodes de contrôle du fonctionnement des routeurs s'attachent à des parties de leur fonctionnement interne qui dépendent de leur réalisation et de leur constitution. Elles présentent alors l'inconvénient de nécessiter une connaissance des routeurs détenue par le fabricant de chaque matériel. Cette connaissance n'est pas toujours facilement disponible pour l'exploitant d'un réseau de communication qui incorpore ces dispositifs. En effet, les recommandations des normes générales ne concernent pas les mécanismes de fonctionnement internes aux routeurs, et ceux-ci sont spécifiques à chaque fabricant.

Les documents US-A-5 610 905 et EP-A-0 841 832 décrivent des procédés de surveillance du fonctionnement de réseaux qui nécessitent de modifier les routeurs pour ajouter des ports de sortie supplémentaires. De tels procédés sont donc particulièrement difficiles à mettre en oeuvres sur des réseaux existants.

Un but de la présente invention est de proposer un procédé d'observation du fonctionnement d'un réseau de communication qui puisse être plus facilement mis en oeuvre par l'opérateur d'un réseau de communication.

L'invention propose un procédé d'observation du fonctionnement d'un réseau de communication par transmission de paquets comprenant des routeurs interconnectés incluant chacun une unité d'acheminement et une unité de commande supervisant l'unité d'acheminement. L'unité d'acheminement de chaque routeur est agencée pour transférer des premiers paquets entre des ports externes dudit routeur et pour transférer des seconds paquets entre les ports externes du routeur et un port interne relié à l'unité de commande. Le procédé comprend les étapes suivantes exécutées parallèlement au transfert de premiers et de seconds paquets par l'unité d'acheminement d'un des routeurs :
- sélectionner des paquets correspondant à certains au moins des seconds paquets transférés au niveau dudit port interne du routeur au moyen d'un filtre de collecte déterminé ; et
- enregistrer un contenu des paquets sélectionnés sur un support d'enregistrement , ce contenu comprenant des données de fonctionnement du réseau.

Selon l'invention, la sélection des paquets et l'extraction du contenu à enregistrer sont effectués au moyen d'un module de collecte disposé à l'intérieur du routeur et connecté à une interface entre l'unité d'acheminement et l'unité de commande de celui-ci.

Un avantage du procédé de l'invention réside dans le fait que les données de fonctionnement du réseau de communication recueillies relèvent d'une interface entre l'unité d'acheminement et l'unité de commande d'un routeur. Ces données sont issues de paquets transportés par le réseau de communication, dont le format et le contenu sont définis par des normes largement utilisées. Ainsi, une connaissance générale du fonctionnement des réseaux est suffisante pour l'interprétation des données collectées.

Un autre avantage de la collecte de données relevant d'une interface entre l'unité d'acheminement et l'unité de commande d'un routeur résulte du fait que ces données définissent le fonctionnement du réseau. Une distinction est ainsi directement possible entre un dysfonctionnement qui intervient au niveau de l'exécution de l'acheminement des paquets par le réseau et une erreur de commande du réseau. En particulier, ces données contiennent des éléments qui se rapportent à divers protocoles, dont des protocoles de routage utilisés pour l'acheminement des paquets par le réseau de communication.

Un autre avantage encore de la collecte de données relevant d'une interface entre l'unité d'acheminement et l'unité de commande d'un routeur réside dans le fait que les paquets collectés comprennent des préfixes liés aux différents protocoles et/ou aux actions commandées par ces paquets. L'accès à ces préfixes est donc immédiat par lecture dans les paquets collectés, sans opération particulière d'association ou de restitution de préfixes.

Un avantage supplémentaire du procédé de l'invention réside dans le fait que ces données de fonctionnement sont collectées puis enregistrées sans intervention active du routeur auquel se rapportent ces données. Ainsi, aucune ressource de ce routeur n'est utilisée pour la collecte des données, si bien que le routeur peut poursuivre en parallèle, sans perturbation, la transmission des paquets.

Selon l'invention, un enregistrement d'un contenu de paquets collectés associés à une interface entre l'unité d'acheminement et l'unité de commande d'un routeur est effectué. Notamment, les paquets peuvent être enregistrés en l'état tels qu'ils sont collectés. Cet enregistrement peut être exhaustif par rapport à l'ensemble des paquets échangés entre l'unité d'acheminement et l'unité de commande du routeur, ou encore concerner une sélection des paquets échangés entre ces deux unités. Cette sélection peut être opérée par un filtre, dit filtre de collecte, portant sur diverses caractéristiques des paquets. Le cas d'un enregistrement exhaustif correspond à un filtre de collecte de type passe-tout.

L'enregistrement du contenu d'un paquet associé à l'interface entre l'unité d'acheminement et l'unité de commande du routeur peut être accompagné d'un enregistrement de coordonnées associées à ce paquet. De telles coordonnées attachées aux paquets peuvent notamment être une adresse de destination ou de provenance, correspondant respectivement à un élément du réseau émetteur ou destinataire d'un paquet, une heure de collecte de ce paquet, un préfixe donné, le type de message transporté par ces paquets, etc... Par exemple, un enregistrement par ordre chronologique des paquets collectés relevant de l'interface entre l'unité d'acheminement et l'unité de commande peut être obtenu selon le procédé de l'invention, en fonction des instants respectifs de collecte des paquets, entre une heure de début et une heure de fin de collecte programmées. Le filtre de collecte applique alors des critères de sélection portant sur des coordonnées spécifiées.

L'enregistrement des paquets ainsi collectés peut ensuite être exploité de différentes façons, en fonction de l'objectif dans lequel cet enregistrement a été effectué, ou dans le cadre d'applications particulières.

Un objectif dans lequel un tel enregistrement peut être effectué est la surveillance du fonctionnement d'un réseau de communication. Cette surveillance, pouvant être accomplie sensiblement en temps réel par rapport au fonctionnement du réseau, peut viser la recherché de dysfonctionnements particuliers, l'identification de modifications intervenues sur des valeurs de paramètres de fonctionnement du réseau, la vérification de la structure du réseau par rapport à des règles générales de conception, ou encore la recherche d'intrusions mal-intentionnées dans le fonctionnement du réseau.

Un tel enregistrement peut aussi être utilisé de façon différée par rapport au moment de l'enregistrement. L'enregistrement sert alors d'archivage de données caractérisant des conditions de fonctionnement du réseau. Il peut être lu à un moment ultérieur par rapport au moment de l'enregistrement, par exemple suite à des anomalies de fonctionnement du réseau de communication détectées par l'opérateur ou signalées à l'opérateur par des utilisateurs du réseau.

Une application de l'enregistrement d'un contenu et de coordonnées de paquets associés à une interface entre l'unité d'acheminement et l'unité de commande d'un routeur est la simulation du fonctionnement d'un réseau de communication. En effet, de tels paquets, sélectionnés de façon appropriée lors de leur collecte, permettent de caractériser une partie du fonctionnement du réseau, et de simuler ultérieurement ce fonctionnement, sur une plate-forme conçue à cet effet, d'après l'enregistrement de ces paquets.

Une telle simulation du fonctionnement d'un réseau présente un intérêt dans les circonstances et applications suivantes :
- lorsqu'une anomalie dans le fonctionnement est suspectée. Le «rejeu» du fonctionnement du réseau constitue alors une aide essentielle pour l'identification de l'origine de l'anomalie ;
- évaluation du fonctionnement du réseau en introduisant des modifications dans la définition ou dans des valeurs des paramètres de fonctionnement du réseau. Il peut s'agir par exemple d'ajuster certains paramètres de topologie du réseau, en vue de trouver un fonctionnement plus efficace du réseau que celui correspondant aux données enregistrées ;
- évaluation d'un fonctionnement en introduisant de nouvelles fonctionnalités ajoutées aux fonctions déjà opérées par le réseau. Un but peut être en particulier de déterminer l'influence des fonctionnalités ajoutées sur la disponibilité ou l'encombrement du réseau ;
- évaluation d'un fonctionnement du réseau en introduisant de nouveaux éléments, notamment de nouveaux éléments de transmission, à certains endroits du réseau. Une telle simulation peut avoir pour but d'évaluer l'influence du nouvel élément introduit sur le comportement du réseau, aussi bien que de tester ce nouvel élément lui-même par rapport à l'environnement que constitue le réseau pendant la période correspondant à l'enregistrement. De telles simulations sont particulièrement utiles dans l'étude des possibilités d'extension d'un réseau par rapport aux risques de saturation des capacités de transfert de certaines parties de ce réseau.

Une autre application de l'enregistrement de contenus et de coordonnées des paquets associés à une interface entre l'unité d'acheminement et l'unité de commande d'un routeur est la centralisation d'une partie de la détermination des chemins destinés à être affectés respectivement à des paquets. En effet, il peut être avantageux, afin d'économiser des ressources dans les routeurs, d'effectuer dans une unité spécifique dédiée à cette tâche une partie de la construction ou de l'actualisation d'une table de détermination des chemins affectés aux paquets. Pour accomplir cette tâche, cette unité spécifique peut utiliser des données de caractérisation du fonctionnement du réseau, et notamment des données de topologie du réseau, issues du contenu et des coordonnées enregistrés des paquets collectés selon le procédé de l'invention.

L'invention concerne aussi un système adapté à la mise en oeuvre du procédé d'observation ci-dessus, appliqué à un routeur du réseau incluant une unité d'acheminement et une unité de commande supervisant l'unité d'acheminement, l'unité d'acheminement étant agencée pour transférer des premiers paquets entre des ports externes dudit routeur et pour transférer des seconds paquets entre les ports externes du routeur et un port interne relié à l'unité de commande. Selon l'invention, le système d'observation comprend :
- des moyens de sélection de paquets correspondant à certains au moins des seconds paquets transférés au niveau dudit port interne du routeur au moyen d'un filtre de collecte déterminé et extraire un contenu à enregistrer;
- une unité d'enregistrement du contenu des paquets sélectionnés sur un support d'enregistrement.

Pour cela, le routeur associé aux seconds paquets sélectionnés incorpore un module de collecte qui est connecté à l'interface entre l'unité d'acheminement et l'unité de commande de celui-ci, et qui comprend les moyens sélection.

L'invention concerne encore un routeur pour un réseau de communication par transmission de paquets, comprenant une unité d'acheminement et une unité de commande supervisant l'unité d'acheminement, l'unité d'acheminement étant agencée pour transférer des premiers paquets entre des ports externes du routeur et pour transférer des seconds paquets entre les ports externes du routeur et un port interne relié à l'unité de commande. Selon l'invention, ce routeur comprend en outre un module de collecte connecté à une interface entre l'unité d'acheminement et l'unité de commande pour sélectionner certains au moins des seconds paquets et extraire un contenu à enregistrer des seconds paquets sélectionnés parallèlement au transfert de premiers et seconds paquets par l'unité d'acheminement.

D'autres particularités et avantages de la présente invention apparaîtront dans la description ci-après de deux exemples de réalisation non limitatifs, en référence aux dessins annexés, dans lesquels :
- la figure 1 représenté un réseau de communication équipé d'un système de collecte et d'enregistrement selon un premier mode de réalisation de l'invention ;
- la figure 2 représente un second mode de réalisation d'un système de collecte et d'enregistrement incorporé à un réseau de communication.

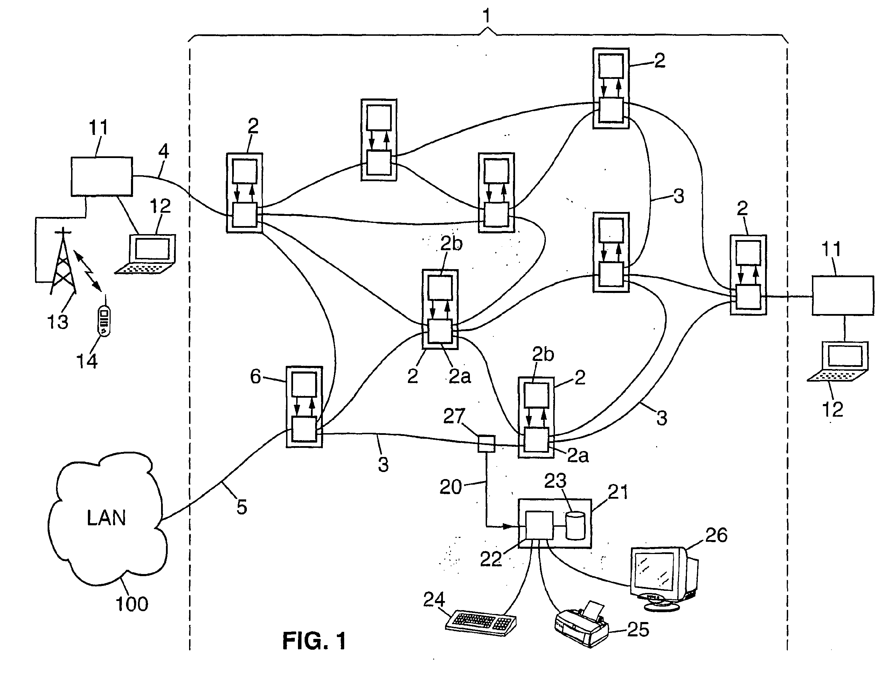

Selon la figure 1, un réseau de communication 1 par transmission de paquets est constitué de routeurs 2 connectés entre eux par des liaisons 3, aussi appelées arcs. Un routeur 2 donné est connecté à un autre routeur de ce réseau 1, mais préférablement à plusieurs autres routeurs 2, afin de permettre plusieurs chemins entre un point de départ et un point d'arrivée pour des paquets transmis par ce réseau de communication 1 entre ces points de départ et d'arrivée.

Un routeur 2 de ce réseau peut aussi être connecté par une liaison de périphérie 4 à une unité hôte («host unit») 11 à laquelle sont connectés des terminaux de communication de divers types, notamment un serveur 12 ou une unité de radiocommunication 13 permettant des liaisons avec des terminaux mobiles 14. Un tel réseau de communication 1 peut alors transmettre des données, sous forme de paquets, entre des utilisateurs équipés de terminaux 12, 14 respectifs.

Par ailleurs, certains routeurs 6 peuvent relier au réseau de communication 1 des réseaux de communication externes, par exemple un réseau local 100, dit LAN («local area network»). Ces routeurs 6 remplissent alors une fonction de passerelle entre le réseau de communication principal 1 et le réseau local 100.

L'architecture interne de chaque routeur 2 est usuellement décomposée en deux unités. Une première unité, représentée schématiquement sur la figure 1 par un niveau inférieur 2a interne à chaque routeur 2, est appelée unité d'acheminement. Elle exécute notamment la transmission des paquets en établissant une commutation, pour chaque paquet, entre des entrées et des sorties qui appartiennent à une interface entre ce routeur 2 et le reste du réseau de communication 1, ou bien entre ce routeur et un autre élément de transmission externe au réseau de communication 1.

Une seconde unité 2b, dite unité de commande et représentée schématiquement sur la figure 1 par un niveau supérieur interne à chaque routeur 2, contrôle l'unité d'acheminement 2a pour commander les commutations en fonction, notamment, des adresses de destination des paquets. Une interface, physique ou logicielle, sépare ces deux unités d'acheminement 2a et de commande 2b au sein de chaque routeur 2.

Pour un paquet donné, selon son adresse de destination, l'unité de commande 2b détermine d'après une table de routage le chemin à affecter au paquet pour son acheminement par le réseau de communication en fonction des valeurs de métrique des liaisons concernées, des niveaux d'encombrement de ces liaisons, et d'autres paramètres. La procédure OSPF v2 («Open Shortest Path First», voir RFC 2328 publiée en avril 1998 par l'IETF) est un exemple de telle méthode de détermination de chemin couramment utilisée.

Pour affecter un chemin de transmission à chaque paquet, l'unité de commande 2b dispose d'informations concernant l'architecture du réseau de communication 1, ainsi que des informations concernant les liaisons 4, 5 de ce réseau avec d'autres réseaux 100, unités hôtes 11 ou installations diverses connectées à des routeurs du réseau de communication 1.

Ces informations sont transmises par des paquets destinés à l'unité de commande 2b d'un routeur 2, reçus au niveau de l'unité d'acheminement 2a de ce routeur. L'unité d'acheminement 2a transfère alors ces paquets à l'unité de commande 2b. Réciproquement, l'unité de commande 2b d'un routeur 2 peut émettre des paquets à destination d'autres routeurs 2, ou d'autres éléments du réseau de communication 1, via l'unité d'acheminement 2a du routeur 2.

Certains de ces paquets émis ou reçus par l'unité de commande 2b d'un routeur 2 participent à l'élaboration d'informations concernant l'architecture et le fonctionnement du réseau de communication 1. Comme tous les paquets acheminés par le réseau de communication 1, ils sont constitués selon des couches successives relevant chacune de protocoles différents.

Les informations concernant l'architecture du réseau de communication 1 comprennent notamment des informations dites de topologie du réseau. Ces dernières regroupent des références, en termes d'adresses, des autres routeurs 2 du réseau, ou d'au moins une partie d'entre eux, ainsi que des valeurs de métrique affectées respectivement à chaque liaison élémentaire entre deux routeurs.

Les informations de topologie sont mises à jour régulièrement par des mécanismes automatiques de détection, tels que, par exemple, ceux du protocole IGP («Interior Gateway Protocol»). Ces mécanismes détectent des modifications temporaires ou durables qui peuvent survenir dans le réseau, et permettent la diffusion entre les routeurs 2 d'éléments d'information concernant des modifications détectées. De telles modifications sont par exemples des coupures de liaison de communication, le changement de valeurs de métrique d'une ou de plusieurs liaisons, le raccordement d'éléments de transmission supplémentaires, un arrêt de fonctionnement d'un routeur ou une suppression de certains éléments de transmission. Des corrélations entre certaines de ces informations, par exemple entre des informations concernant le fonctionnement ou le non-fonctionnement de liaisons 3, permettent l'élaboration d'informations plus globales. Elles permettent notamment de déterminer une partie du réseau de communication 1 momentanément isolée, ou non-adjacente, par rapport au reste du réseau, à cause d'un manque de chemins disponibles pour des paquets entre une source extérieure à cette partie isolée et un terminal appartenant à cette partie isolée.

D'autres informations concernent, par exemple, les connexions 4, 5 du réseau de communication 1 à des éléments extérieurs 11, 100. De telles informations peuvent notamment être obtenues selon le protocole EGP («Exterior Gateway Protocol», voir RFC 904 publiée en avril 1984 par l'IETF).

Toutes ces informations sont acquises par émission de paquets issus de l'unité de commande 2b d'un routeur 2 à destination d'autres éléments de transmission du réseau de communication 1, et par réception de paquets par cette unité de commande 2b émis par d'autres éléments de transmission du réseau. Ainsi, les paquets échangés au niveau de l'interface entre l'unité d'acheminement 2a et l'unité de commande 2b d'un routeur 2 reflètent le fonctionnement du réseau d'une part, ainsi que, d'autre part, définissent un cadre de l'activité de transmission de paquets de ce routeur. Une collecte de ces paquets permet donc de saisir des données de fonctionnement du routeur aussi bien que des données de fonctionnement global du réseau de communication.

Selon un premier mode de mise en oeuvre du procédé de l'invention, cette collecte est effectuée par un module de collecte 27 relié à une unité informatique 21. Cette unité informatique 21 peut être constituée d'un ordinateur usuel. Une liaison 20 relie cette unité informatique 21 au module de collecte 27. Le module de collecte 27 est connecté par exemple à une liaison 3 aboutissant à un routeur déterminé 2. Le module de collecte 27 est agencé pour collecter ceux des paquets transportés par la liaison 3 qui sont émis par ou destinés à l'unité de commande 2b de ce routeur déterminé 2. De façon générale, le module de collecte 27 transmet de façon transparente, c'est-à-dire sans intervention sur les paquets ni sur leur transport, tous les paquets portés par la liaison 3 à laquelle il est connecté.

L'unité informatique 21 comprend une interface 22 à laquelle est connectée la liaison 20, programmable par un dispositif de saisie 24 telle qu'un clavier. Elle comprend aussi une unité d'enregistrement 23, constituée d'un support d'enregistrement, par exemple d'une capacité de quelques centaines de gigaoctets, et de moyens de lecture/écriture de données sur ce support d'enregistrement. Elle est par ailleurs reliée à des dispositifs périphériques permettant la lecture de données par un opérateur, tels qu'une imprimante 25 et un écran de visualisation 26.

La programmation de l'interface 22 peut consister en l'élaboration d'un filtre de collecte des paquets collectés par le module de collecte 27, qui correspondent à des paquets transmis entre l'unité d'acheminement 2a et l'unité de commande 2b du routeur déterminé 2. Ce filtre peut porter sur des critères variés, tels que par exemple, le contenu de certains champs d'en tête des paquets indicatif d'un protocole dont relève un contenu du message porté par ce paquet, l'heure de transmission de ce paquet ou tout autre critère de sélection. Ces paquets, accompagnés éventuellement de coordonnées attachées à ces paquets, telles que l'heure de collecte de chaque paquet, sont alors envoyés à l'unité d'enregistrement 23 pour être inscrits sur le support d'enregistrement.

Le même ensemble de composants 21-26 peut aussi permettre la lecture des données ainsi enregistrées, comprenant le contenu enregistré de paquets et des coordonnées attachées à ces paquets. Un filtre de lecture, aussi programmé au niveau de l'interface 22 en vue d'une exploitation spécifique de ces données, peut alors être utilisé pour sélectionner les paquets dont le contenu et les coordonnées sont lus parmi toutes les données enregistrées.

Ce premier mode de mise en oeuvre de l'invention présente l'avantage de nécessiter un matériel très restreint, limité par exemple à un ordinateur portable adapté et à un module de collecte. Ce module de collecte, relié à l'ordinateur portable, est connecté pour la durée de l'enregistrement à une liaison 3 du réseau de communication 1 par un opérateur. Cette liaison 3 doit être choisie en fonction de sa position dans le réseau de communication 1 afin d'obtenir des données pertinentes par rapport aux informations recherchées concernant le fonctionnement du réseau de communication 1, ou par rapport à l'application en vue de laquelle ces données sont collectées.

Ce premier mode de réalisation requiert le déplacement d'un opérateur jusqu'à un point de la liaison 3 choisi afin de connecter le module de collecte 27.

Les données collectées sont limitées aux paquets transportés par la liaison 3 à laquelle le module de collecte 27 est connecté.

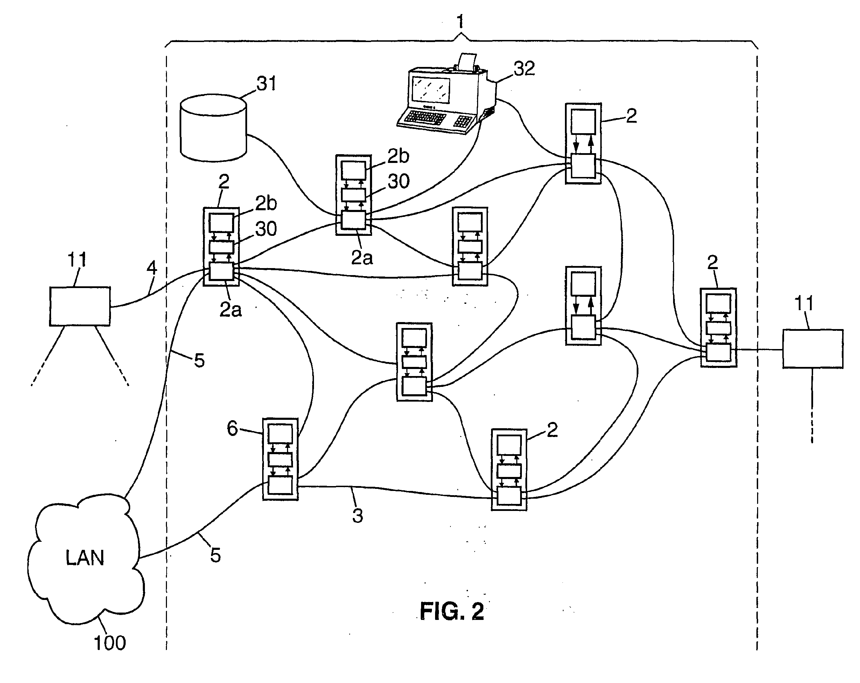

Un mode de réalisation préféré de l'invention, correspondant à la figure 2, ne présente pas ces limitations, et permet en outre d'effectuer des corrélations entre les données recueillies simultanément au niveau de plusieurs routeurs 2.

La figure 2 reprend les éléments du réseau de communication de la figure 1. Les éléments de ce réseau identiques à ceux présentés en détail plus haut ne sont pas repris ici, ni la description du principe de fonctionnement d'un tel réseau. Des références identiques entre les figures 1 et 2 correspondent à des éléments analogues.

Dans ce mode de réalisation préféré, chaque routeur 2, ou certains au moins des routeurs 2 du réseau de communication 1, comprend, en plus de l'unité d'acheminement 2a et de l'unité de commande 2b, un module de collecte 30 connecté au niveau de l'interface entre ces deux unités. Ce module de collecte 30 est disposé pour permettre la collecte de seconds paquets sans perturber leur transmission au sein du routeur 2, ni leur rôle dans le fonctionnement du réseau de communication 1. Il est installé de façon permanente dans le routeur 2.

Par ailleurs, ce module de collecte 30 est agencé pour pouvoir en outre émettre des paquets destinés à être transmis par le réseau de communication 1, via l'unité d'acheminement 2a.

Une unité d'enregistrement 31, comprenant un support d'enregistrement et des moyens de lecture/écriture sur ce support, et une unité de supervision 32 sont par ailleurs reliés au réseau de communication 1. Cette unité de supervision 32 et cette unité d'enregistrement 31 peuvent éventuellement être regroupées au sein d'un même dispositif, mais non nécessairement. L'unité de supervision 32 comprend des interfaces de saisie et de visualisation usuels. Dans cette configuration, un module de collecte 30 en cours d'utilisation, l'unité d'enregistrement 31 et l'unité de supervision 32 sont géographiquement distants entre eux, étant reliés par le réseau de communication 1.

Dans ce mode de réalisation préféré de l'invention, les paquets sélectionnés et enregistrés sont donc directement des seconds paquets transférés au niveau dudit port interne d'un routeur 2.

Le module de collecte 30 localisé dans un routeur 2 est programmable par le biais de codes de programmation envoyés par un opérateur depuis l'unité de supervision 32. Ces codes de programmation, qui contiennent par exemple des données pour activer la collecte de paquets, sont transportés par le réseau de communication 1 sous forme de paquets adressés audit module de collecte 30. Ces codes de programmation peuvent aussi contenir les données nécessaires pour une collecte sélective de paquets, selon des critères de sélection particuliers constituant un filtre de collecte.

En réponse à cette consigne de collecte, le module de collecte 30 renvoie par le réseau de communication 1 à destination de l'unité d'enregistrement 31, un contenu des paquets collectés, ainsi que des coordonnées attachées à ces paquets. Pour cela, le contenu et les coordonnées des paquets concernés sont configurés sous forme de paquets pour être transmis par le réseau de communication 1, de la même façon que des paquets émis par un terminal d'utilisateur du réseau de communication 1. A la réception de ces paquets, l'unité d'enregistrement 31 procède alors à l'enregistrement des données collectées par le module de collecte 30 et contenues dans ces paquets.

Dans ce mode de réalisation, l'unité de supervision 32 peut envoyer des consignes de collecte simultanément à différents modules de collecte 30 localisés dans plusieurs routeurs 2. Chacun d'eux renvoie alors en retour à l'unité d'enregistrement 31 les données collectées au niveau du routeur 2 dans lequel il est placé. Les coordonnées attachées au contenu des paquets collectés comprennent alors une adresse du routeur 2 dans lequel chaque paquet a été collecté.

Une telle acquisition simultanée de données de fonctionnement en plusieurs points du réseau de communication 1 permet une meilleure caractérisation du fonctionnement de celui-ci. Cela permet en particulier d'effectuer des corrélations entre des événements survenant en des points distincts du réseau de communication 1.

Les codes de programmation envoyés par l'unité de supervision 32 aux modules de collecte 30 ainsi que les contenus et coordonnées des paquets retournés par les modules de collecte 30 à l'unité d'enregistrement 31 peuvent être transportés sous forme cryptée par le réseau de communication 1. Cette précaution permet d'éviter une exploitation de ces données par un individu malintentionné. Pour cela des éléments de cryptage connus de l'homme du métier, ou SSL («Security Shell Layer») sont utilisés au niveau des modules de capture 30, de l'unité d'enregistrement 31 et de l'unité de supervision 32 pour crypter ou décrypter les données transmises.

L'enregistrement des données de fonctionnement du réseau de communication 1 correspondant aux paquets collectés peut alors être exploité de différente façons.

Tout d'abord, il permet une observation en temps réel du fonctionnement du réseau, ou de certains aspects de ce fonctionnement en fonction d'une sélection des paquets pratiquée au moment de la lecture de l'enregistrement. Un filtre de lecture est utilisé pour cela, qui comporte des critères de sélection des paquets visualisés. Des critères du filtre de lecture sont par exemple une date d'apparition du paquet, le type d'événement auquel se rapporte un paquet, le protocole de commande auquel se rapporte un contenu des paquets, etc... Des méthodes d'interrogations diverses peuvent alors être utilisées pour composer des requêtes adaptées par rapport à la recherche effectuée. Une surveillance du réseau peut ainsi être effectuée, portant sur des aspects très variés de son fonctionnement, tels que la disponibilité ou le niveau de saturation de certaines liaisons, des changements d'adresses pratiqués par des usagers, des modifications de valeurs de métrique attachées à des liaisons, une perte de communication avec certaines parties de réseau, etc.... La présentation du résultat des requêtes formulées est alors adaptée à la mise en évidence d'un aspect particulier du fonctionnement du réseau de communication. Des présentations très utilisées sont par exemple des bilans statistiques répétés sur des durées déterminées ou des histogrammes relatifs à des évènements protocolaires sélectionnés.

De la même façon, un fonctionnement d'un réseau de communication enregistré sur une période déterminée peut être observé à un instant différé par rapport au moment de son déroulement, grâce à l'enregistrement effectué selon l'invention.

Les données enregistrées correspondant à des contenus et des coordonnées de paquets transmis entre l'unité d'acheminement 2a et l'unité de commande 2b d'un routeur 2 peuvent aussi être exploitées par une unité de simulation de fonctionnement du réseau de communication 1. En effet, ces données comprennent des informations caractéristiques d'une partie au moins du fonctionnement du réseau de communication 1 en cours au moment de l'enregistrement. Cette unité de simulation peut alors reconstituer le fonctionnement du réseau tel que perçu au niveau du ou des routeurs 2 dans lesquels les paquets ont été collectés.

Cette unité de simulation permet en outre simuler le fonctionnement du réseau en intégrant des modifications de la définition du réseau. De telles modifications sont par exemple des extensions du réseau ou l'ajout de liaisons supplémentaires, afin d'évaluer, avant leur mise en oeuvre, l'intérêt et les conséquences de ces modifications sur le fonctionnement du réseau de communication 1.

Enfin, les données enregistrées correspondant à des contenus et des coordonnées de paquets transmis entre l'unité d'acheminement 2a et l'unité de commande 2b d'un routeur 2 peuvent être exploitées par un dispositif de détermination et/ou d'actualisation de tables de routage. Les tables de routage sont des ensembles de données, usuellement établies et mémorisées au sein de chaque routeur 2, qui permettent à l'unité de commande 2b de chaque routeur de déterminer un chemin à affecter à chaque paquet transféré par le réseau de communication 1, en fonction des données d'adressage de ce paquet. Pour cela, la table de routage d'un routeur 2 est actualisée en fonction d'informations d'évolution et de fonctionnement du réseau, notamment des informations de topologie du réseau, qui parviennent à l'unité de commande 2b du routeur. Ces informations sont aussi relayées par le routeur en direction des routeurs voisins, afin de permettre des actualisations des tables de tous les routeurs concernés par ces informations. Il s'agit donc d'une actualisation locale des tables de routage, diffusée entre les routeurs par émission de paquets destinés aux unités de commande 2b de chacun d'eux.

L'enregistrement, selon l'invention, des paquets contenant les informations d'évolution du réseau de communication 1, permet de regrouper l'ensemble des opérations de détermination et d'actualisation des tables de routage. Pour cela, une unité spécifique exploite de façon centralisée les informations enregistrées et détermine les modifications des tables de routage induites par les évolutions du réseau. Ces modifications sont alors adressées aux différents routeurs 2 concernés pour l'actualisation des tables de routage enregistrées au niveau de chacun d'eux. Ces données sont adressées, sous forme de paquets transmis par le réseau de communication 1, aux unités de commande 2b de chacun de ces routeurs. Ainsi, une partie ou l'intégralité de l'actualisation des tables de routage est accomplie de façon centralisée pour plusieurs routeurs, ce qui résulte en une économie globale d'opérations effectuées.

## Revendications

1. Procédé de collecte de données de fonctionnement d'un réseau de communication par transmission de paquets (1) comprenant des routeurs interconnectés (2) incluant chacun une unité d'acheminement (2a) et une unité de commande (2b) supervisant l'unité d'acheminement, l'unité d'acheminement de chaque routeur étant agencée pour transférer des premiers paquets entre des ports externes dudit routeur et pour transférer des seconds paquets entre les ports externes du routeur et un port interne relié à l'unité de commande du routeur, le procédé comprenant les étapes suivantes, exécutées parallèlement au transfert de premiers et de seconds paquets par l'unité d'acheminement d'un des routeurs (2) :
- sélectionner des paquets correspondant à certains au moins des seconds paquets transférés au niveau dudit port interne du routeur (2) au moyen d'un filtre de collecte déterminé ; et
- enregistrer un contenu des paquets sélectionnés sur un support d'enregistrement, ledit contenu comprenant des données de fonctionnement du réseau,
le procédé étant **caractérisé en ce que** la sélection des paquets et une extraction dudit contenu à enregistrer des paquets sélectionnés sont effectuées au moyen d'un module de collecte (30) disposé à l'intérieur dudit routeur (2) et connecté à une interface entre l'unité d'acheminement (2a) et l'unité de commande (2b) dudit routeur.

2. Procédé selon la revendication 1, suivant lequel on connecte au réseau de communication (1), à distance du routeur comprenant le module de collecte (2), une unité d'enregistrement (31) à laquelle on envoie ledit contenu des paquets sélectionnés.

3. Procédé selon la revendication 2, comprenant en outre une mise en forme dudit contenu des paquets sélectionnés préalable à l'envoi de ce contenu à l'unité d'enregistrement (31) par le réseau de communication (1), la mise en forme comprenant l'affectation au contenu de données d'adressage correspondant à l'unité d'enregistrement (31).

4. Procédé selon la revendication 3, suivant lequel le contenu des paquets sélectionnés est crypté préalablement à l'envoi de ce contenu à l'unité d'enregistrement (31) par le réseau de communication (1).

5. Procédé selon l'une quelconque des revendications précédentes, suivant lequel le module de collecte (30) est programmable à distance à l'aide de codes de programme envoyés au module de collecte par le réseau de communication (1).

6. Procédé selon l'une quelconque des revendications précédentes, comprenant en outre une étape de lecture de contenus enregistrés de paquets sélectionnés.

7. Procédé selon la revendication 6, comprenant en outre une étape de sélection selon un filtre de lecture de contenus enregistrés de paquets sélectionnés selon le filtre de collecte.

8. Procédé selon l'une quelconque des revendications précédentes, dans lequel ledit contenu d'un paquet sélectionné est enregistré avec des coordonnées dudit paquet sélectionné.

9. Procédé selon la revendication 8, dans lequel les coordonnées enregistrées d'un paquet sélectionné comprennent un horodatage de la collecte dudit paquet sélectionné.

10. Procédé selon la revendication 8 ou 9, dans lequel les coordonnées enregistrées d'un paquet sélectionné comprennent une adresse du routeur (2) qui contient ledit port interne au niveau duquel est transféré ledit second paquet correspondant audit paquet sélectionné.

11. Système de collecte de données de fonctionnement d'un réseau de communication par transmission de paquets (1) comprenant des routeurs interconnectés (2) incluant chacun une unité d'acheminement (2a) et une unité de commande (2b) supervisant l'unité d'acheminement, l'unité d'acheminement de chaque routeur étant agencée pour transférer des premiers paquets entre des ports externes dudit routeur et pour transférer des seconds paquets entre les ports externes du routeur et un port interne relié à l'unité de commande, le système comprenant :
- des moyens de sélection de paquets correspondant à certains au moins des seconds paquets transférés au niveau dudit port interne d'un des routeurs (2) au moyen d'un filtre de collecte déterminé et extraire un contenu à enregistrer ; et
- une unité d'enregistrement (23, 31) du contenu des paquets sélectionnés sur un support d'enregistrement,
le système étant **caractérisé en ce que** le routeur associé aux seconds paquets sélectionnés (2) incorpore un module de collecte (30) connecté à une interface entre l'unité d'acheminement (2a) et l'unité de commande (2b) dudit routeur, et comprenant les moyens de sélection.

12. Système selon la revendication 11, dans lequel l'unité d'enregistrement (31) est connectée au réseau de communication (1) à distance dudit routeur (2).

13. Système selon la revendication 12, comprenant en outre des moyens de mise en forme dudit contenu des paquets sélectionnés.

14. Système selon la revendication 13, dans lequel les moyens de mise en forme comprennent des moyens d'affectation au contenu de données d'adressage correspondant à l'unité d'enregistrement (31).

15. Système selon l'une quelconque des revendications 12 à 14, comprenant en outre un module de cryptage pour crypter ledit contenu des paquets sélectionnés.

16. Système selon la revendication 11, dans lequel le module de collecte (30) est agencé pour recevoir par le réseau de communication (1) des codes de programmation du module de collecte.

17. Système selon l'une quelconque des revendications 11 à 16, comprenant en outre des moyens de lecture sur le support d'enregistrement du contenu enregistré de paquets sélectionnés.

18. Système selon la revendication 17, comprenant en outre des moyens pour sélectionner des contenus enregistrés de paquets en fonction d'un filtre de lecture, lors de la lecture sur le support d'enregistrement des contenus de paquets sélectionnés selon le filtre de collecte.

19. Système selon l'une quelconque des revendications 11 à 18, dans lequel l'unité d'enregistrement (23, 31) est agencée pour enregistrer ledit contenu d'un paquet sélectionné avec des coordonnées dudit paquet sélectionné.

20. Système selon la revendication 19, dans lequel les coordonnées enregistrées d'un paquet sélectionné comprennent un horodatage de la collecte dudit paquet sélectionné.

21. Système selon la revendication 19 ou 20, dans lequel les coordonnées enregistrées d'un paquet sélectionné comprennent une adresse du routeur (2) qui contient ledit port interne au niveau duquel est transféré ledit second paquet correspondant audit paquet sélectionné.

22. Système selon l'une quelconque des revendications 11 à 21, comprenant en outre une unité de simulation du fonctionnement du réseau de communication (1) en utilisant les contenus enregistrés de paquets sélectionnés.

23. Système selon l'une quelconque des revendications 11 à 21, comprenant en outre une unité pour construire et/ou actualiser, à partir des contenus enregistrés de paquets sélectionnés, une table de détermination de chemins destinés à être respectivement affectés à des paquets transférés par l'unité d'acheminement (2a) du routeur.

24. Routeur (2) pour un réseau de communication par transmission de paquets (1), comprenant une unité d'acheminement (2a) et une unité de commande (2b) supervisant l'unité d'acheminement, l'unité d'acheminement étant agencée pour transférer des premiers paquets entre des ports externes du routeur et pour transférer des seconds paquets entre les ports externes du routeur et un port interne relié à l'unité de commande, **caractérisé en ce qu'**il comprend en outre un module de collecte (30) connecté à une interface entre l'unité d'acheminement (2a) et l'unité de commande (2b) pour sélectionner certains au moins des seconds paquets et extraire un contenu à enregistrer des seconds paquets sélectionnés parallèlement au transfert de premiers et seconds paquets par l'unité d'acheminement.

25. Utilisation du procédé selon l'une quelconque des revendications 1 à 10 pour collecter des données permettant de caractériser une partie du fonctionnement du réseau.

26. Utilisation selon la revendication 25, suivant laquelle les données collectées permettent en outre de simuler ladite partie de fonctionnement du réseau.

## Claims

1. Method for collecting data on the operation of a packet transmission communication network (1) comprising interconnected routers (2) each including a routing unit (2a) and a control unit (2b) supervising the routing unit, the routing unit of each router being organized to transfer first packets between external ports of said router and to transfer second packets between the external ports of the router and an internal port connected to the control unit of the router, the method comprising the following steps, performed parallel to the transfer of first and second packets by the routing unit of one of the routers (2):
- selecting packets corresponding to at least some of the second packets transferred at said internal port of a router (2) by means of a determined collection filter; and
- recording a content of the selected packets on a recording medium, said content comprising data on the operation of the network,
the method being **characterized in that** the selection of packets and an extraction of said content to be recorded of the selected packets are carried out by means of a collection module (30) disposed inside said router (2) and connected to an interface between the routing unit (2a) and the control unit (2b) of said router.

2. Method according to Claim 1, in which a recording unit (31) is connected to the communication network (1), remote from the router (2) comprising the collection module, and said content of the selected packets is sent to said recording unit.

3. Method according to Claim 2, also comprising a formatting of said content of the selected packets prior to the sending of this content to the recording unit (31) via the communication network (1), the formatting comprising the assignment to the content of address data corresponding to the recording unit (31).

4. Method according to Claim 3, in which the content of the selected packets is encrypted prior to the sending of this content to the recording unit (31) via the communication network (1).

5. Method according to any one of the preceding claims, in which the collection module (30) is remotely programmable by means of program codes sent to the collection module via the communication network (1).

6. Method according to any one of the preceding claims, also comprising a step for reading recorded contents of selected packets.

7. Method according to Claim 6, also comprising a selection step according to a filter for reading recorded contents of packets selected according to the collection filter.

8. Method according to any one of the preceding claims, in which said content of a selected packet is recorded with coordinates of said selected packet.

9. Method according to Claim 8, in which the recorded coordinates of a selected packet comprise a timestamp of the collection of said selected packet.

10. Method according to Claim 8 or 9, in which the recorded coordinates of a selected packet comprise an address of the router (2) which contains said internal port at which said second packet corresponding to said selected packet is transferred.

11. System for collecting data on the operation of a packet transmission communication network (1) comprising interconnected routers (2) each including a routing unit (2a) and a control unit (2b) supervising the routing unit, the routing unit of each router being organized to transfer first packets between external ports of said router and to transfer second packets between the external ports of the router and an internal port connected to the control unit, the system comprising:
- means of selecting packets corresponding to at least some of the second packets transferred at said internal port of one of the routers (2) by means of a determined collection filter and of extracting the content to be recorded; and
- a unit (23, 31) for recording a content of the selected packets on a recording medium,
the system being **characterized in that** the router (2) associated with the second selected packets incorporates a collection module (30) connected to an interface between the routing unit (2a) and the control unit (2b), and comprising the means of selection.

12. System according to Claim 11, in which the recording unit (31) is connected to the communication network (1) remotely from said router (2).

13. System according to Claim 12, also comprising means of formatting said content of the selected packets.

14. System according to Claim 13, in which the formatting means comprise means of assigning to the content address data corresponding to the recording unit (31).

15. System according to any one of Claims 12 to 14, also comprising an encryption module for encrypting said content of the selected packets.

16. System according to Claim 11, in which the collection module (30) is organized to receive programming codes of the collection module via the communication network (1).

17. System according to any one of Claims 11 to 16, also comprising means of reading on the recording medium the recorded content of selected packets.

18. System according to Claim 17, also comprising means for selecting recorded contents of packets according to a read filter, when the contents of packets selected according to the collection filter are read on the recording medium.

19. System according to any one of Claims 11 to 18, in which the recording unit (23, 31) is organized to record said content of a selected packet with coordinates of said selected packet.

20. System according to Claim 19, in which the recorded coordinates of a selected packet comprise a timestamp of the collection of said selected packet.

21. System according to Claim 19 or 20, in which the recorded coordinates of a selected packet comprise an address of the router (2) which contains said internal port at which said second packet corresponding to said selected packet is transferred.

22. System according to any one of Claims 11 to 21, also comprising a unit for simulating the operation of the communication network (1) by using the recorded contents of selected packets.

23. System according to any one of Claims 11 to 21, also comprising a unit for constructing and/or updating, based on the recorded contents of selected packets, a table for determining paths intended to be respectively assigned to packets transferred by the routing unit (2a) of the router.

24. Router (2) for a packet transmission communication network (1), comprising a routing unit (2a) and a control unit (2b) supervising the routing unit, the routing unit being organized to transfer first packets between external ports of the router and to transfer second packets between the external ports of the router and an internal port connected to the control unit, **characterized in that** it also comprises a collection module (30) connected to an interface between the routing unit (2a) and the control unit (2b) to select at least some of the second packets and extract a content to be recorded of the second packets selected in parallel with the transfer of first and second packets by the routing unit.

25. Use of the method according to any one of Claims 1 to 10 for collecting data used to characterize a portion of the operation of the network.

26. Use according to Claim 25, in which the collected data are also used to simulate said portion of operation of the network.

## Patentansprüche

1. Verfahren zum Sammeln von Betriebsdaten eines Kommunikationsnetzwerks durch Paketübertragung (1), mit miteinander verbundenen Routern (2), die je eine Weiterleitungseinheit (2a) und eine Steuereinheit (2b) umfassen, die die Weiterleitungseinheit überwacht, wobei die Weiterleitungseinheit jedes Routers ausgelegt ist, um erste Pakete zwischen externen Ports des Routers zu übertragen und um zweite Pakete zwischen den externen Ports des Routers und einem internen Port zu übertragen, der mit der Steuereinheit des Routers verbunden ist, wobei das Verfahren die folgenden Schritte aufweist, die parallel zur Übertragung der ersten und zweiten Pakete durch die Weiterleitungseinheit eines der Router (2) ausgeführt werden:
- Auswahl der Pakete, die zumindest bestimmten der zweiten Pakete entsprechen, die auf der Ebene des internen Ports des Routers (2) übertragen werden, mit Hilfe eines bestimmten Sammelfilters; und
- Speichern eines Inhalts der ausgewählten Pakete in einem Speicherträger, wobei der Inhalt Betriebsdaten des Netzwerks enthält,
wobei das Verfahren **dadurch gekennzeichnet ist, dass** die Auswahl der Pakete und eine Entnahme des zu speichernden Inhalts der ausgewählten Pakete mittels eines Sammelmoduls (30) ausgeführt werden, das innerhalb des Routers (2) angeordnet und mit einer Schnittstelle zwischen der Weiterleitungseinheit (2a) und der Steuereinheit (2b) des Routers verbunden ist.

2. Verfahren nach Anspruch 1, gemäß dem in Abstand zum das Sammelmodul enthaltenden Router (2) eine Speichereinheit (31) mit dem Kommunikationsnetzwerk (1) verbunden wird, an die der Inhalt der ausgewählten Pakete gesendet wird.

3. Verfahren nach Anspruch 2, das weiter eine Formatierung des Inhalts der ausgewählten Pakete vor dem Senden dieses Inhalts an die Speichereinheit (31) über das Kommunikationsnetzwerk (1) enthält, wobei die Formatierung die Zuweisung von Adressierungsdaten entsprechend der Speichereinheit (31) zum Inhalt enthält.

4. Verfahren nach Anspruch 3, gemäß dem der Inhalt der ausgewählten Pakete vor dem Senden dieses Inhalts an die Speichereinheit (31) über das Kommunikationsnetzwerk (1) verschlüsselt wird.

5. Verfahren nach einem der vorhergehenden Ansprüche, gemäß dem das Sammelmodul (30) mit Hilfe von Programmcodes fernprogrammierbar ist, die über das Kommunikationsnetzwerk (1) an das Sammelmodul gesendet werden.

6. Verfahren nach einem der vorhergehenden Ansprüche, das außerdem einen Schritt des Lesens von gespeicherten Inhalten ausgewählter Pakete enthält.

7. Verfahren nach Anspruch 6, das weiter einen Auswahlschritt gemäß einem Lesefilter von gespeicherten Inhalten gemäß dem Sammelfilter ausgewählter Pakete enthält.

8. Verfahren nach einem der vorhergehenden Ansprüche, bei dem der Inhalt eines ausgewählten Pakets mit Adressierungsdaten des ausgewählten Pakets gespeichert wird.

9. Verfahren nach Anspruch 8, bei dem die gespeicherten Adressierungsdaten eines ausgewählten Pakets eine Zeit- und Datumsangabe des Sammelns des ausgewählten Pakets enthalten.

10. Verfahren nach Anspruch 8 oder 9, bei dem die gespeicherten Adressierungsdaten eines ausgewählten Pakets eine Adresse des Routers (2) aufweisen, der den internen Port enthält, auf dessen Ebene das zweite Paket übertragen wird, das dem ausgewählten Paket entspricht.

11. Betriebsdaten-Sammelsystem eines Kommunikationsnetzwerks durch Paketübertragung (1) mit miteinander verbundenen Routern (2), die je eine Weiterleitungseinheit (2a) und eine Steuereinheit (2b) enthalten, die die Weiterleitungseinheit überwacht, wobei die Weiterleitungseinheit jedes Routers ausgelegt ist, um erste Pakete zwischen externen Ports des Routers zu übertragen und um zweite Pakete zwischen den externen Ports des Routers und einem internen Port zu übertragen, der mit der Steuereinheit verbunden ist, wobei das System aufweist:
- Mittel zur Auswahl von Paketen, die zumindest bestimmten der zweiten Pakete entsprechen, die auf der Ebene des internen Ports eines der Router (2) mit Hilfe eines bestimmten Sammelfilters übertragen werden, und Entnahme eines zu speichernden Inhalts; und
- eine Einheit (23, 31) zum Speichern des Inhalts der ausgewählten Pakete in einem Speicherträger,
wobei das System **dadurch gekennzeichnet ist, dass** der den zweiten ausgewählten Paketen zugeordnete Router (2) ein Sammelmodul (30) enthält, das mit einer Schnittstelle zwischen der Weiterleitungseinheit (2a) und der Steuereinheit (2b) des Routers verbunden ist und die Auswahlmittel aufweist.

12. System nach Anspruch 11, bei dem die Speichereinheit (31) mit dem Kommunikationsnetzwerk (1) in Abstand zum Router (2) verbunden ist.

13. System nach Anspruch 12, das weiter Mittel zur Formatierung des Inhalts der ausgewählten Pakete aufweist.

14. System nach Anspruch 13, bei dem die Formatierungsmittel Mittel zur Zuweisung von Adressierungsdaten entsprechend der Speichereinheit (31) zum Inhalt aufweisen.

15. System nach einem der Ansprüche 12 bis 14, das weiter ein Verschlüsselungsmodul zur Verschlüsselung des Inhalts der ausgewählten Pakete aufweist.

16. System nach Anspruch 11, bei dem das Sammelmodul (30) ausgelegt ist, um über das Kommunikationsnetzwerk (1) Programmiercodes des Sammelmoduls zu empfangen.

17. System nach einem der Ansprüche 11 bis 16, das weiter Lesemittel auf dem Speicherträger des gespeicherten Inhalts ausgewählter Pakete aufweist.

18. System nach Anspruch 17, das weiter Mittel zur Auswahl gespeicherter Inhalte von Paketen in Abhängigkeit von einem Lesefilter beim Lesen der Inhalte von gemäß dem Sammelfilter ausgewählten Paketen auf dem Speicherträger aufweist.

19. System nach einem der Ansprüche 11 bis 18, bei dem die Speichereinheit (23, 31) ausgelegt ist, um den Inhalt eines ausgewählten Pakets mit Adressierungsdaten des ausgewählten Pakets zu speichern.

20. System nach Anspruch 19, bei dem die gespeicherten Adressierungsdaten eines ausgewählten Pakets eine Zeit- und Datumsangabe des Sammelns des ausgewählten Pakets aufweisen.

21. System nach Anspruch 19 oder 20, bei dem die gespeicherten Adressierungsdaten eines ausgewählten Pakets eine Adresse des Routers (2) aufweisen, der den internen Port enthält, auf dessen Ebene das dem ausgewählten Paket entsprechende zweite Paket übertragen wird.

22. System nach einem der Ansprüche 11 bis 21, das weiter eine Einheit zur Simulation des Betriebs des Kommunikationsnetzwerks (1) unter Verwendung der gespeicherten Inhalte ausgewählter Pakete aufweist.

23. System nach einem der Ansprüche 11 bis 21, das weiter eine Einheit für den Aufbau und/oder die Aktualisierung, ausgehend von den gespeicherten Inhalten ausgewählter Pakete, einer Bestimmungstabelle von Wegen aufweist, die dazu bestimmt sind, Paketen zugeteilt zu werden, die von der Weiterleitungseinheit (2a) des Routers übertragen werden.

24. Router (2) für ein Kommunikationsnetzwerk durch Paketübertragung (1), der eine Weiterleitungseinheit (2a) und eine Steuereinheit (2b) enthält, die die Weiterleitungseinheit überwacht, wobei die Weiterleitungseinheit ausgelegt ist, um erste Pakete zwischen externen Ports des Routers zu übertragen und um zweite Pakete zwischen den externen Ports des Routers und einem internen Port zu übertragen, der mit der Steuereinheit verbunden ist, **dadurch gekennzeichnet, dass** er außerdem ein Sammelmodul (30) aufweist, das mit einer Schnittstelle zwischen der Weiterleitungseinheit (2a) und der Steuereinheit (2b) verbunden ist, um zumindest bestimmte der zweiten Pakete auszuwählen und einen zu speichernden Inhalt aus den ausgewählten zweiten Pakete zu entnehmen, parallel zur Übertragung der ersten und zweiten Pakete durch die Weiterleitungseinheit.

25. Verwendung des Verfahrens nach einem der Ansprüche 1 bis 10 zum Sammeln von Daten, die die Kennzeichnung eines Teils des Betriebs des Netzes erlauben.

26. Verwendung nach Anspruch 25, gemäß der die gesammelten Daten es außerdem ermöglichen, den Teil des Betriebs des Netzwerks zu simulieren.
